# EUROPEAN PATENT APPLICATION

(11) **EP 3 372 353 A1**
(43) Date of publication of application: **12.09.2018**
(21) Application number: 18155955.0
(22) Date of filing: 09.02.2018
(51) Int. Cl.: B25J 9/06, B25J 13/00

(54) **CONTINUUM ROBOTS**

(30) Priority: 09.03.2017 GB 201703755
(71) Applicant: Rolls-Royce plc, London SW1E 6AT (GB)
(72) Inventor: Alatorre Troncoso, David, Derby, Derbyshire DE24 8BJ (GB); Rabani, Amir, Derby, Derbyshire DE24 8BJ (GB)
(74) Representative: Rolls-Royce plc

(57) **Abstract**

A continuum robot(10) comprising: a first segment (12) defining a first end and a second end, the first segment including a first actuator (18) coupled to the second end and configured to control movement of the second end relative to the first end; and a first elastic strain sensor (20) coupled to the first segment and positioned between the first end and the second end, the first elastic strain sensor being configured to provide a first output signal associated with the movement of the second end relative to the first end.

## Description

### TECHNOLOGICAL FIELD

The present disclosure concerns continuum robots, methods of controlling continuum robots, apparatus for controlling continuum robots, computer programs, non-transitory computer readable storage mediums and signals.

### BACKGROUND

Continuum robots may be used in industry to perform inspection and/or repair activities on an article. Examples of continuum robots include (but are not limited to) "snake arm" robots and "elephant trunk" robots. For example, a continuum robot may be inserted into a gas turbine engine through a borescope port or through the fan to inspect the interior of the gas turbine engine for wear and/or damage. By way of another example, a continuum robot may be inserted into a gas turbine engine to carry out a repair activity on a component within the gas turbine engine (blending of a leading edge of a compressor blade for example).

### BRIEF SUMMARY

According to various examples there is provided a continuum robot comprising: a first segment defining a first end and a second end, the first segment including a first actuator coupled to the second end and configured to control movement of the second end relative to the first end; and a first elastic strain sensor coupled to the first segment and positioned between the first end and the second end, the first elastic strain sensor being configured to provide a first output signal associated with the movement of the second end relative to the first end.

The first segment may include a first disk at the first end of the first segment, a second disk at the second end of the first segment. The first elastic strain sensor may be positioned between the first disk and the second disk. The first actuator may be coupled to the second disk and configured to control movement of the second disk relative to the first disk. The first elastic strain sensor may be configured to provide a first output signal associated with the movement of the second disk relative to the first disk.

The first elastic strain sensor may comprise a conductive elastic material.

The first elastic strain sensor may comprise a non-conductive elastic vessel defining a cavity, and a conductive material positioned within the cavity.

The conductive material positioned within the cavity may comprise a conductive liquid.

The continuum robot may further comprise a plurality of fibres positioned within the cavity of the non-conductive elastic vessel.

The first elastic strain sensor may comprise a first conductive elastic member, a second conductive elastic member, and a non-conductive elastic member positioned between the first conductive elastic member and the second conductive elastic member.

The continuum robot may further comprise a flexible backbone extending through the first segment and between the first disk and the second disk. The gap may be defined between the flexible backbone and the first elastic strain sensor.

The first disk and the second disk may define a perimeter of the first segment. The first elastic strain sensor may be positioned at the perimeter of the first segment.

The continuum robot may further comprise a second elastic strain sensor coupled to the first segment and positioned between the first disk and the second disk. The second elastic strain sensor may be configured to provide a second output signal associated with the movement of the second disk relative to the first disk.

The first segment may define a longitudinal axis. The first elastic strain sensor and the second elastic strain sensor may be positioned to at least partially overlap one another along the longitudinal axis.

The continuum robot may further comprise a controller configured to receive the first output signal and the second output signal, and to perform a torsion measurement of the first segment using the received first output signal and second output signal.

The first segment may define a longitudinal axis. The first elastic strain sensor and the second elastic strain sensor may be positioned to not overlap one another along the longitudinal axis.

The continuum robot may further comprise a controller configured to receive the first output signal from the first elastic strain sensor, and to determine the shape of the first segment using the received first output signal.

The controller may be configured to control the first actuator using the determined shape of the first segment to move the second disk relative to the first disk.

The continuum robot may further comprise: a second segment including a third disk at a first end of the second segment, a fourth disk at a second end of the second segment, a second actuator coupled to the fourth disk and configured to control movement of the fourth disk relative to the third disk; and a third elastic strain sensor coupled to the second segment and positioned between the third disk and the fourth disk, the third elastic strain sensor being configured to provide a third output signal associated with the movement of the fourth disk relative to the third disk.

The first actuator may comprise one or more elastic vessels that are configured to change shape in response to a change in internal pressure. The one or more elastic vessels may extend between the first end and the second end of the first segment.

The continuum robot may be a snake arm robot.

According to various examples there is provided a method of controlling a continuum robot as described in any of the preceding paragraphs, the method comprising: receive the first output signal from the first elastic strain sensor; determine the shape of the first segment using the received first output signal; and control the first actuator using the determined shape of the first segment to move the second end relative to the first end.

According to various examples there is provided apparatus for controlling a continuum robot as described in the preceding paragraphs, the apparatus comprising a controller configured to: receive the first output signal from the first elastic strain sensor; determine the shape of the first segment using the received first output signal; and control the first actuator using the determined shape of the first segment to move the second end relative to the first end.

According to various examples there is provided a computer program that, when read by a computer, causes performance of the method as described in the preceding paragraphs.

According to various examples there is provided a non-transitory computer readable storage medium comprising computer readable instructions that, when read by a computer, cause performance of the method as described in the preceding paragraphs.

According to various examples there is provided a signal comprising computer readable instructions that, when read by a computer, cause performance of the method as described in the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of a first continuum robot according to various examples;
Fig. 2 illustrates a schematic diagram of an elastic strain sensor according to a first example;
Fig. 3 illustrates a schematic diagram of an elastic strain sensor according to a second example;
Fig. 4 illustrates a schematic diagram of an elastic strain sensor according to a third example;
Fig. 5 illustrates a schematic diagram of an elastic strain sensor according to fourth example;
Fig. 6 illustrates a schematic diagram of a second continuum robot according to various examples;
Figs. 7A, 7B and 7C illustrate front views of three arrangements of elastic strain sensors according to various examples;
Fig. 8 illustrates a side view of a third continuum robot according to various examples;
Fig. 9 illustrates a schematic diagram of a fourth continuum robot according to various examples; and
Fig. 10 illustrates a flow diagram of a method of controlling a continuum robot according to various examples.

### DETAILED DESCRIPTION

In the following description, the terms 'connected' and 'coupled' mean operationally connected and coupled. It should be appreciated that there may be any number of intervening components between the mentioned features, including no intervening components.

In summary, the disclosure relates to continuum robots having one or more elastic strain sensors that are configured to provide output signals associated with the movement of the continuum robots. The output signals may be used to determine the shape of the continuum robots.

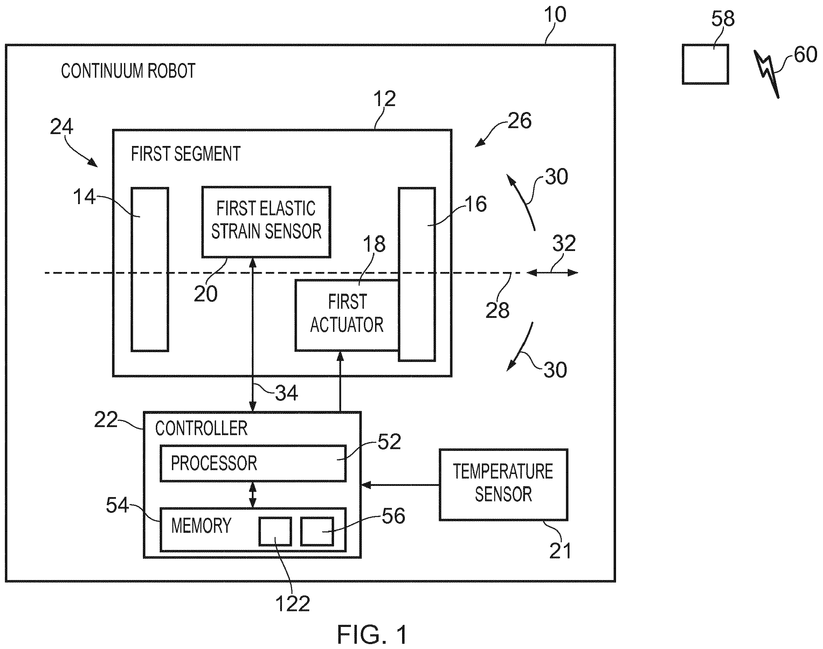

In more detail, fig. 1 illustrates a schematic diagram of a first continuum robot 10 comprising a first segment 12 including a first disk 14, a second disk 16, a first actuator 18, a first elastic strain sensor 20. The first continuum robot 10 may also comprise one or more temperature sensors 21 and/or a controller 22 in some examples. Furthermore, it should be appreciated that the first continuum robot 10 may comprise one or more further segments having the same structure as the first segment 12.

The continuum robot 10 may be any suitable robot and may be a "snake arm" robot, a "snake" robot, or an "elephant trunk" robot, for example. The continuum robot 10 may be used in various industries to perform one or more actions. For example, the continuum robot 10 may be inserted within a gas turbine engine to inspect and/or repair the gas turbine engine. By way of another example, the continuum robot 10 may be inserted into a pressurised water reactor (PWR) of a nuclear power plant to inspect and/or repair the pressurised water reactor.

In some examples, the continuum robot 10 may be a module. As used herein, the wording 'module' refers to a device or apparatus where one or more features are included at a later time and, possibly, by another manufacturer or by an end user. For example, where the continuum robot 10 is a module, the continuum robot 10 may only include the first disk 14, the second disk 16, the first actuator 18, and the first elastic strain sensor 20, and the remaining features (such as additional disks, additional actuators, the controller 22, additional elastic strain sensors) may be added by another manufacturer, or by an end user.

The first segment 12 has a first end 24, a second end 26 and a longitudinal axis 28 that extends between the first end 24 and the second end 26. The first disk 14 is positioned at the first end 24 of the first segment 12 and the longitudinal axis 28 extends through the centre of the first disk 14. The second disk 16 is positioned at the second end 26 of the first segment 12 and the longitudinal axis 28 extends through the centre of the second disk 16.

The first disk 14 may have any suitable shape. For example, the first disk 14 may be circular, elliptical, square, rectangular, or have any polygonal shape when viewed in plan. Additionally, the first disk 14 may comprise any suitable material. For example, the first disk 14 may comprise a metal or a plastic. As illustrated in Fig. 1 where the continuum robot 10 is in a straight configuration, the first disk 14 is oriented perpendicular to the longitudinal axis 28. The first disk 14 may be planar or non-planar.

The second disk 16 may have any suitable shape. For example, the second disk 16 may be circular, elliptical, square, rectangular, or have any polygonal shape when viewed in plan. Additionally, the second disk 16 may comprise any suitable material and may comprise a different material to the first disk 14. For example, the second disk 14 may comprise a metal or a plastic. As illustrated in Fig. 1 where the continuum robot 10 is in a straight configuration, the second disk 16 is oriented perpendicular to the longitudinal axis 28. The second disk 16 may be planar or non-planar.

The first actuator 18 is coupled to the second disk 16 and is configured to control movement of the second disk 16 relative to the first disk 14. For example, the first actuator 18 may be configured to control the second disk 16 to move vertically up and down relative to the first disk 14 as indicated by arrows 30. Additionally or alternatively, the first actuator 18 may be configured to control the second disk 16 to move horizontally left and right relative to the first disk 14 as indicated by arrow 32. Additionally or alternatively, the first actuator 18 may be configured to control the second disk 16 to move into or out of the page relative to the first disk 14. The first actuator 18 may include any suitable device or devices for control movement of the second disk 16 relative to the first disk 14. For example, the first actuator 18 may include one or more control cables for controlling the movement of the second disk 16. By way of another example, the first actuator 18 may include one or more inflatable members that may be inflated with air, for example, to move the second disk 16 relative to the first disk 14.

The first elastic strain sensor 20 is coupled to the first segment 12 and is positioned between the first disk 14 and the second disk 16. For example, the first elastic strain sensor 20 may be coupled to the first disk 14 and to the second disk 16. In another example, the first elastic strain sensor 20 may be coupled to an interior surface or an exterior surface of a cover that houses the first disk 14, the second disk 16, and the first actuator 18. The first elastic strain sensor 20 is configured to provide a first output signal 34 associated with the movement of the second disk 16 relative to the first disk 14. For example, as the second disk 16 moves relative to the first disk 14, the first elastic strain sensor 20 deforms. The deformation of the first elastic strain sensor 20 may change the resistivity of the first elastic strain sensor 20, thus changing the voltage of the first output signal 34.

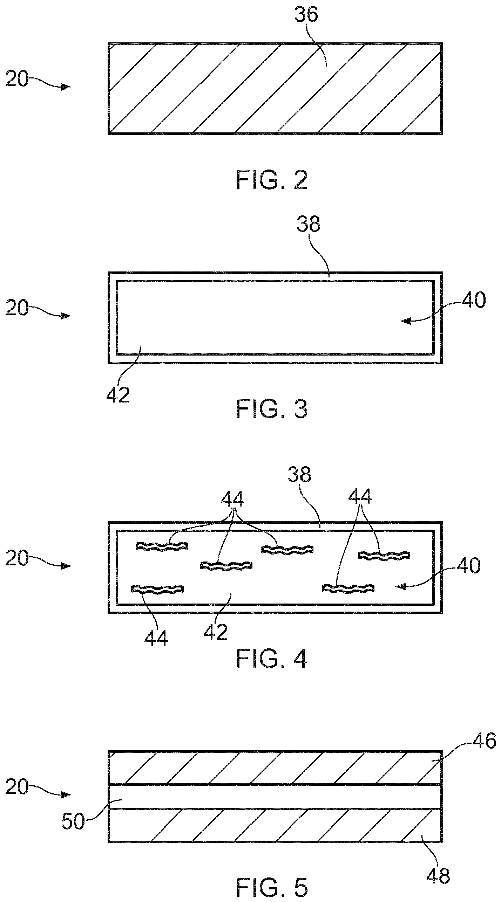

The first elastic strain sensor 20 is electrically conductive and may have any suitable structure. For example, the first elastic strain sensor 20 may be structured as illustrated in Figs. 2, 3, 4 and 5.

Fig. 2 illustrates a schematic diagram of the first elastic strain sensor 20 according to a first example. The first elastic strain sensor 20 comprises a conductive elastic material 36 such as a butyl rubber impregnated with carbon black, or a nitrile rubber impregnated with carbon black. When the first elastic strain sensor 20 is stretched and changes in length, the resistivity of the first elastic strain sensor 20 changes with the change in length.

Fig. 3 illustrates a schematic diagram of the first elastic strain sensor 20 according to a second example. The first elastic strain sensor 20 comprises a non-conductive elastic vessel 38 defining a cavity 40, and a conductive liquid 42 positioned within the cavity 40. For example, the non-conductive elastic vessel 38 may comprise silicone rubber, and the conductive liquid 42 may include a metal that is liquid at or near room temperature. For example, the non-conductive elastic vessel 38 may comprise copper grease, water-soluble ions such as tetrabutylphosphonium methanesulfonate in solution, room temperature ionic liquids such as 1-butyl-3-methylimidazolium trifluoromethanesulfonate, and 1-butyl-3-octylimidazolium chloride. When the first elastic strain sensor 20 is stretched, the conductive liquid 42 adopts the shape of the deformed cavity 40 and the resistivity of the first elastic strain sensor 20 changes.

Fig. 4 illustrates a schematic diagram of the first elastic strain sensor 20 according to a third example. The first elastic strain sensor 20 comprises a non-conductive elastic vessel 38 defining a cavity 40, a liquid 42 positioned within the cavity 40, and a plurality of fibres 44 positioned within the cavity 40. For example, the non-conductive elastic vessel 38 may comprise silicone rubber, the liquid 42 may comprise a conductive material (such as any of the materials mentioned in the preceding paragraph), and the plurality of fibres 44 may comprise a conductive material (such as a metal, for example, steel wool or gold fibres) or a highly permeable non-conductive material (such as cotton, glass fibres, carbon fibres, or synthetic fibres such as nylon or other polymers). In other examples, the liquid 42 may comprise a non-conductive material (such as air), and the plurality of fibres 44 may comprise a conductive material (such as a metal, for examples, steel wool or gold fibres). The density of the plurality of fibres 44 within the cavity 40 is selected so that the plurality of fibres 44 may move relative to one another, but remain in electrical contact with one another.

Fig. 5 illustrates a schematic diagram of the first elastic strain sensor 20 according to a fourth example. The first elastic strain sensor 20 comprises a first conductive elastic member 46, a second conductive elastic member 48, and a non-conductive elastic member 50 positioned between the first conductive elastic member 46 and the second conductive elastic member 48. The first and second conductive elastic members 46, 48 may comprise any suitable material and may comprise a butyl rubber impregnated with carbon black, or a nitrile rubber impregnated with carbon black. The non-conductive elastic member 50 may comprise a non-conductive material such as silicone rubber.

When the first elastic strain sensor 20 is stretched, the depth of the non-conductive elastic member 50 is reduced, thus bringing the first and second conductive elastic members 46, 48 closer to one another. The changing proximity of the first and second conductive elastic members 46, 48 changes the capacitance of the first elastic strain sensor 20, thus causing a change in the output signal 34 from the first elastic strain sensor 20.

It should be appreciated than an elastic strain sensor according to the fourth example may have more than two conductive elastic members, and more than one non-conductive elastic member.

The temperature sensor 21 may comprise any suitable device, or devices, for sensing one or more temperatures at the continuum robot 10. For example, the temperature sensor 21 may include one or more thermocouples that are mounted to the exterior surface of the continuum robot 10. The controller 22 is configured to receive the sensed one or more temperatures from the temperature sensor 21.

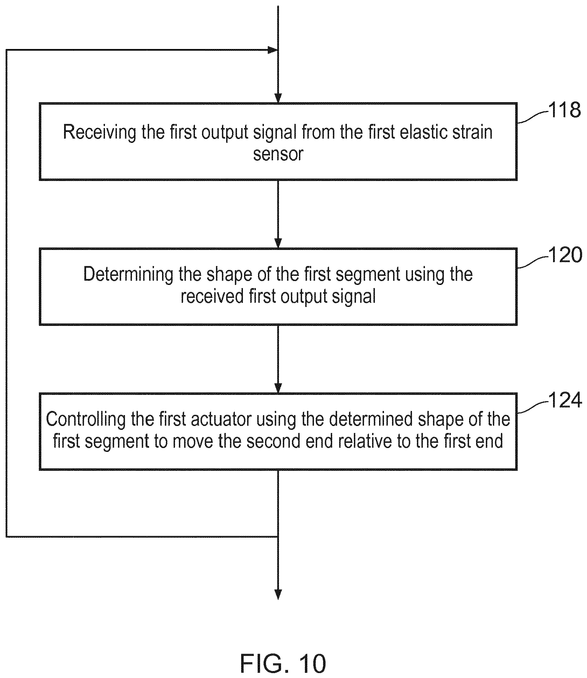

The controller 22 may comprise any suitable circuitry to cause performance of the methods described herein and as illustrated in Fig. 10. The controller 22 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 22 may comprise at least one processor 52 and at least one memory 54. The memory 54 stores a computer program 56 comprising computer readable instructions that, when read by the processor 52, causes performance of the methods described herein, and as illustrated in Fig. 10. The computer program 56 may be software or firmware, or may be a combination of software and firmware.

The processor 52 may be located on the continuum robot 10, or may be located remote from the continuum robot 10, or may be distributed between the continuum robot 10 and a location remote from the continuum robot 10. The processor 52 may include at least one microprocessor and may comprise a single core processor, may comprise multiple processor cores (such as a dual core processor or a quad core processor), or may comprise a plurality of processors (at least one of which may comprise multiple processor cores).

The memory 54 may be located on the continuum robot 10, or may be located remote from the continuum robot 10, or may be distributed between the continuum robot 10 and a location remote from the continuum robot 10. The memory 54 may be any suitable non-transitory computer readable storage medium, data storage device or devices, and may comprise a hard disk and/or solid state memory (such as flash memory). The memory 54 may be permanent non-removable memory, or may be removable memory (such as a universal serial bus (USB) flash drive or a secure digital card). The memory 54 may include: local memory employed during actual execution of the computer program 56; bulk storage; and cache memories which provide temporary storage of at least some computer readable or computer usable program code to reduce the number of times code may be retrieved from bulk storage during execution of the code.

The computer program 56 may be stored on a non-transitory computer readable storage medium 58. The computer program 56 may be transferred from the non-transitory computer readable storage medium 58 to the memory 54. The non-transitory computer readable storage medium 58 may be, for example, a USB flash drive, a secure digital (SD) card, an optical disc (such as a compact disc (CD), a digital versatile disc (DVD) or a Blu-ray disc). In some examples, the computer program 56 may be transferred to the memory 54 via a signal 60 (such as a wireless signal or a wired signal).

Input/output devices may be coupled to the controller 22 either directly or through intervening input/output controllers. Various communication adaptors may also be coupled to the controller 22 to enable the continuum robot 10 to become coupled to other continuum robots, remote printers, storage devices, input devices, or output devices through intervening private or public networks. Non-limiting examples include modems and network adaptors of such communication adaptors.

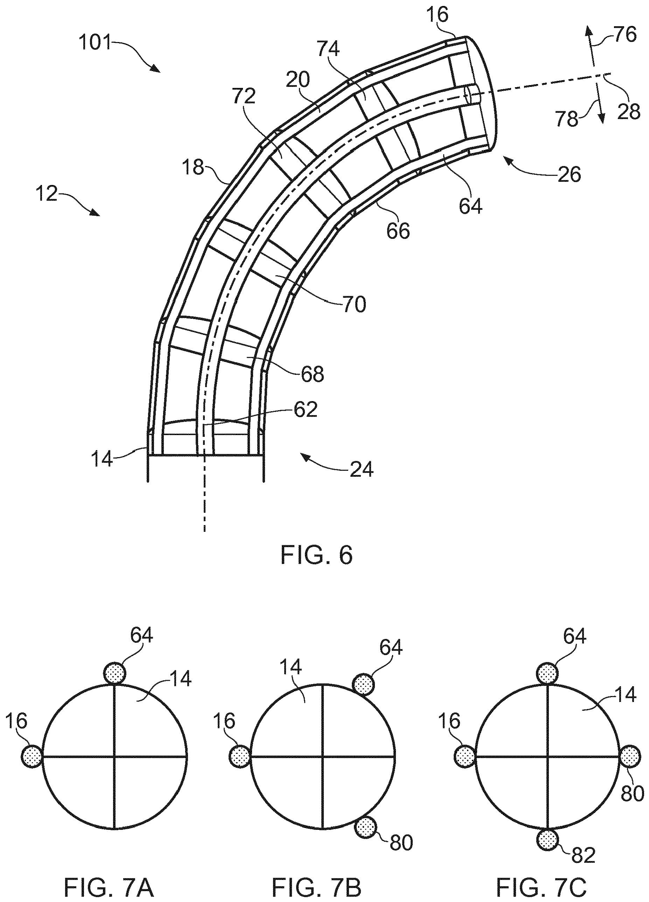

Fig. 6 illustrates a schematic diagram of a second continuum robot 101 according to various examples. The second continuum robot 101 is similar to the first continuum robot 10 illustrated in Fig. 1, and where the features are similar, the same reference numerals are used.

The first segment 12 of the second continuum robot 101 includes a flexible backbone 62, a first elastic strain sensor 20, a first actuator 18, a second elastic strain sensor 64, a second actuator 66, a first disk 14, a second disk 16, a third disk 68, a fourth disk 70, a fifth disk 72, and a sixth disk 74.

The first disk 14 is positioned at a first end 24 of the first segment 12 and the second disk 16 is positioned at a second end 26 of the first segment 12. The third disk 68, the fourth disk 70, the fifth disk 72, and the sixth disk 74 are positioned between the first disk 14 and the second disk 16 along the longitudinal axis 28 and so that the longitudinal axis 28 extends through the centres of the third disk 68, the fourth disk 70, the fifth disk 72, and the sixth disk 74.

The first, second, third, fourth, fifth and sixth disks 14, 16, 68, 70, 72, 74 define a perimeter of the first segment 12. In some examples, the first, second, third, fourth, fifth and sixth disks 14, 16, 68, 70, 72, 74 may not be covered and may thus define an exterior surface of the continuum robot 10. In other examples, the first, second, third, fourth, fifth and sixth disks 14, 16, 68, 70, 72, 74 may be covered by an elastic material that defines an exterior surface of the continuum robot 10.

Where the first segment 12 forms a free end of the continuum robot 101, a device may be coupled to the second disk 16. For example, an inspection device such as an imaging sensor, or optics, may be coupled to the second disk 16. By way of another example, a machine tool such as a grinding tool or a drill, may be coupled to the second disk 16 to enable the continuum robot 101 to perform a manufacturing or repair process.

The flexible backbone 62 may comprise any suitable elastic material and may comprise, for example, a nickel titanium alloy (which may be referred to as nitinol), or rubber. The flexible backbone 62 extends through the first segment 12, along the longitudinal axis 28, and through the centres of the first disk 14, the third disk 68, the fourth disk 70, the fifth disk 72, the sixth disk 74, and the second disk 16.

The first actuator 18 and the second actuator 66 each comprise a control cable that extends through (and is positioned at or near the perimeter of) the first disk 14, the third disk 68, the fourth disk 72, the fifth disk 74 and the sixth disk 76 and is coupled to the second disk 16. The first and second actuators 18, 66 may be pulled (by a servo motor for example) to move the second disk 16 relative to the first disk 14. For example, the first actuator 18 may be pulled to move the second disk 14 in the direction of arrow 76, and the second actuator 66 may be pulled to move the second disk 14 in the direction of arrow 78. It should be appreciated that as the first and second actuators 18, 66 are pulled, the third, fourth, fifth and sixth disks 68, 70, 72, 74 also move relative to the first disk 14 and thus cause the curvature of the first segment 12 (and the longitudinal axis 28) to change.

The first elastic strain sensor 20 is coupled to the first disk 14 and to the second disk 16 and extends along the length of the first segment 12 (on the left hand side of the first segment 12 as illustrated in Fig. 6). The first elastic strain sensor 20 is positioned at or near the perimeter of the first segment 12 and consequently a gap is defined between the flexible backbone 62 and the first elastic strain sensor 20.

The second elastic strain sensor 64 is coupled to the first disk 14 and to the second disk 16 and extends along the length of the first segment 12 (on the right hand side of the first segment 12 as illustrated in Fig. 6). The second elastic strain sensor 64 is positioned at the perimeter of the first segment 12 and consequently a gap is defined between the flexible backbone 62 and the second elastic strain sensor 64.

It should be appreciated that the first elastic strain sensor 20 and the second elastic strain sensor 64 illustrated in Fig. 6 are positioned so that they wholly overlap one another along the longitudinal axis 28 (that is, the first and second elastic strain sensors 20, 64 have the same axial positions along the longitudinal axis 28). In other examples, the first and second elastic strain sensors 20, 64 may only partially overlap one another along the longitudinal axis 28 (that is, the first elastic strain sensor 20 and/or the second elastic strain sensor 64 have an axial position (or axial positions) that is not shared with the other of the first elastic strain sensor 20 and the second elastic strain sensor 64).

The first elastic strain sensor 20 and the second elastic strain sensor 64 may have an alternative arrangement to the one illustrated in Fig. 6. For example, as illustrated in Fig. 7A (a view along the longitudinal axis of the first segment 12), the first elastic strain sensor 20 may be positioned at a nine o clock position, and the second elastic strain sensor 64 may be positioned at a twelve o clock position. This arrangement can be used to measure two different degrees of freedom in bending (for example, arrow 30 and in/out of page in Fig 1)

By way of another example, as illustrated in Fig. 7B (a view along the longitudinal axis of the first segment 12), the first elastic strain sensor 20 may be positioned at a nine o clock position, the second elastic strain sensor 64 may be positioned at a one o clock position, and a third elastic strain sensor 80 may be positioned at a five o clock position. Where the first segment 12 has two degrees of freedom, the three elastic strain sensors 16, 64, 80 may advantageously provide redundancy to measurements made from the output of the three elastic strain sensors 16, 64, 80, or may be used to measure the shape of a first segment with three degrees of freedom of movement such as arrows 30, 32 and in/out of page as illustrated in Fig 1.

By way of a further example, as illustrated in Fig. 7C (a view along the longitudinal axis of the first segment 12), the first elastic strain sensor 20 may be positioned at a nine o clock position, the second elastic strain sensor 64 may be positioned at a twelve o clock position, the third elastic strain sensor 80 may be positioned at a three o clock position, and a fourth elastic strain sensor 82 may be positioned at a six o clock position. Where the first segment has two degrees of freedom, the four elastic strain sensors 16, 64, 80, 82 may advantageously provide redundancy to each degree of freedom by the measurements made from the output of the four elastic strain sensors 16, 64, 80, 82 a tension and a relaxation measurement.

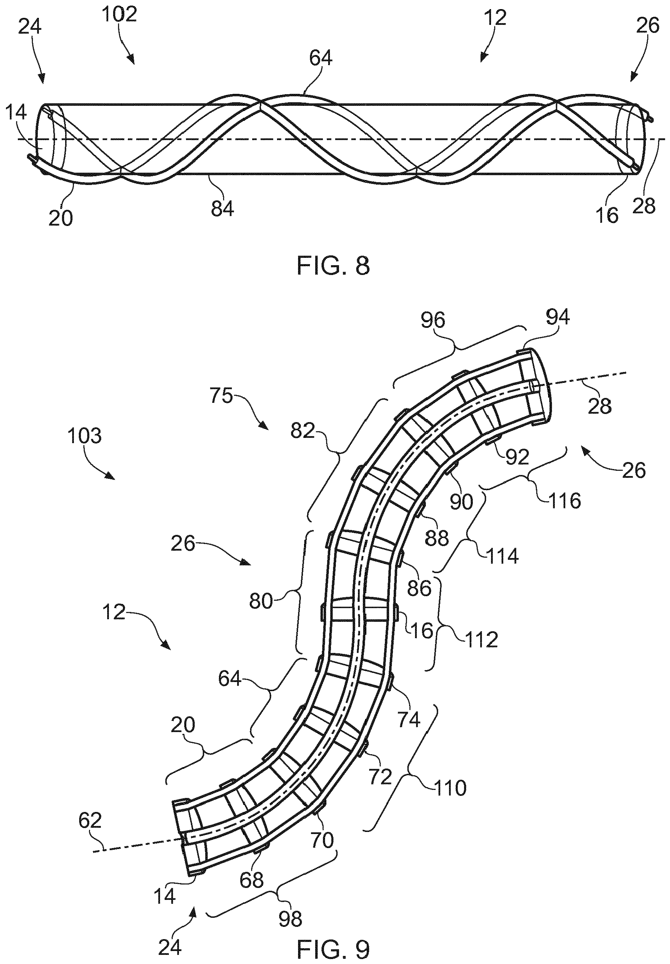

Fig. 8 illustrates a schematic side view of a third continuum robot 102 according to various examples. The third continuum robot 102 is similar to the first and second continuum robots 10, 101 and where the features are similar, the same reference numerals are used.

A first segment 12 of the third continuum robot 102 includes an elastic cover 84 that houses a plurality of disks and one or more actuators. The first segment 12 also includes a first elastic strain sensor 20 that is mounted on the exterior of the elastic cover 84 and extends helically around the longitudinal axis 28 of the first segment 12 on a right hand helix. Additionally, the first segment 12 includes a second elastic strain sensor 64 that is mounted on the exterior of the elastic cover 84 (at different positions to the first elastic strain sensor 20) and extends helically around the longitudinal axis 28 of the first segment on a left hand helix.

The third continuum robot 102 may be advantageous in that the helical arrangement of the first and second elastic strain sensors 20, 64 may enable torsion of the first segment 12 to be measured from the output of the first and second elastic strain sensors 20, 64 (that is, the turning motion about the axis 28 of the disk 16 relative to the disk 14).

Fig. 9 illustrates a schematic side view of a fourth continuum robot 103 according to various examples. The fourth continuum robot 103 is similar to the first, second and third continuum robots 10, 101, 102 and where the features are similar, the same reference numerals are used.

A first segment 12 of the fourth continuum robot 103 includes a flexible backbone 62, a first disk 14 positioned at a first end 24 of the first segment 12, and a second disk 16 positioned at a second end 26 of the first segment 12. Positioned between the first and second disks 14, 16, the first segment 12 also includes a third disk 68, a fourth disk 70, a fifth disk 72, and a sixth disk 74.

A second segment 75 of the fourth continuum robot 103 includes the flexible backbone 62, a seventh disk 86 positioned at a first end of the second segment, and an eleventh disk 94 positioned at a second end of the second segment 75. Positioned between the seventh disk 86 and the eleventh disk 94, the second segment 75 also includes an eighth disk 88, a ninth disk 90, and a tenth disk 92.

On the left hand side of the flexible backbone 62, the first segment 12 includes a first elastic strain sensor 20 positioned between the first disk 14 and the fourth disk 70, a second elastic strain sensor 64 positioned between the fourth disk 70 and the sixth disk 74, and a third elastic strain sensor 80 positioned between the sixth disk 74 and the seventh disk 86. The second segment 75 includes a fourth elastic strain sensor 82 positioned between the seventh disk 86 and the ninth disk 90, and a fifth elastic strain sensor 96 positioned between the ninth disk 90 and the eleventh disk 94.

On the right hand side of the flexible backbone 62, the first segment 12 includes a sixth elastic strain sensor 98 positioned between the first disk 14 and the fourth disk 70, a seventh elastic strain sensor 110 positioned between the fourth disk 70 and the sixth disk 74, and an eighth elastic strain sensor 112 positioned between the sixth disk 74 and the seventh disk 86. The second segment 75 includes a ninth elastic strain sensor 114 positioned between the seventh disk 86 and the ninth disk 90, and a tenth elastic strain sensor 116 positioned between the ninth disk 90 and the eleventh disk 94.

The elastic strain sensors 20, 64, 80, 82, 96 on the left hand side of the flexible backbone 62 are positioned to not overlap one another along the longitudinal axis 28 (that is, they are positioned sequentially along the longitudinal axis 28). Similarly, the elastic strain sensors 98, 110, 112, 114, 116 on the right hand side of the flexible backbone 62 are positioned to not overlap one another along the longitudinal axis 28.

The arrangement of the first to tenth elastic strain sensors 20, 64, 80, 82, 96, 98, 110, 112, 114, 116 around the flexible backbone 62 and along the longitudinal axis 28 may be advantageous in that they may increase the resolution of the determined shapes of the first and second segments 12, 75 (relative to an example where single elastic strain sensors extends between the end disks of the first and second segments 12, 75). It should be appreciated that the resolution may be increased by reducing the axial length of the elastic strain sensors. For example, an elastic strain sensor may be positioned between each adjacent disk to provide a higher resolution than the resolution provided by the arrangement illustrated in Fig. 9.

Fig. 10 illustrates a flow diagram of a method of controlling a continuum robot 10, 101, 102, 103, according to various examples.

At block 118, the method includes receiving the first output signal from the first elastic strain sensor. For example, the controller 22 may receive the first output signal 34 from the first elastic strain sensor 20. It should be appreciated that where a continuum robot 10, 101, 102, 103 includes a plurality of elastic strain sensors, block 118 may include receiving output signals from the plurality of elastic strain sensors.

At block 120, the method includes determining the shape of the first segment using the received first output signal. For example, the controller 22 may store a data structure 122 (such as a look-up table) that includes a plurality of first output signal values and a plurality of corresponding shapes of the first segment 12. The controller 22 may determine the shape of the first segment 12 by reading the data structure 122 and by selecting the shape that has a first output signal value closest to the received first output signal 34.

The data structure 122 may be generated and stored in the memory 54 using a calibration process. For example, the continuum robot 10, 101, 102, 103 may be calibrated using a two dimensional or a three dimensional vision system. The continuum robot 10, 101, 102, 103 may be moved in controlled steps and the real position of the end of the segment (for example, the second end 26) is monitored along with the resistance or capacitance of the one or more elastic strain sensors. The outcome of this test is then compared to theoretical values from models of elastic strain sensors and their change of resistance or capacitance with cross sectional area. The output signal from the one or more elastic strain sensors may thus be related to a value of curvature of the segment it is coupled to. The output signal values and the corresponding values of curvature may be stored in the memory 54 as the data structure 122.

There are two options for data structure 122: a look-up table or a system of equations that relate the strain ε to property x (resistance, capacitance, and so on). The former uses ε and x measurements directly to inform the controller 22, the latter uses a model of the system (knowledge of the physical phenomena that change x due to changes in ε) and calculates ε based on measured x.

Calibration serves to either build the ε, x look-up table or validate the model so that ε can be described as a function of x.

Where the elastic strain sensors of the continuum robot 10, 101, 102, 103 are affected by the ambient temperature, the calibration process may include obtaining output signals from the one or more elastic strain sensors and values of curvature at a plurality of different temperatures. In such examples, the shape of the first segment 12 may be read from the data structure 122 using the received first output signal and a sensed temperature value at the continuum robot 10, 101, 102, 103 from the temperature sensor 21.

At block 124, the method includes controlling the first actuator using the determined shape of the first segment to move the second disk relative to the first disk. For example, the continuum robot 10, 101, 102, 103 may have received an instruction to adopt a desired shape (for example, to reach a particular area within a gas turbine engine). The controller 22 may use the determined shape from block 120 and the desired shape to determine the control signals for moving the continuum robot 10, 101, 102, 103 from the determined shape and towards the desired shape. The controller 22 may then send the determined control signals to the actuators of the continuum robot 10, 101, 102, 103 (such as the first actuator 18) to move the segments (such as the first segment 12) of the continuum robot 10, 101, 102, 103.

The method may then return to block 118, or may end.

The continuum robots 10, 101, 102, 103 and the above described method may provide several advantages. First, the elastic strain sensors may provide a relatively inexpensive means for determining the shape of a continuum robot. Second, the continuum robots 10, 101, 102, 103 may be relatively portable because the elastic strain sensors are coupled to the continuum robot. Third, the continuum robots 10, 101, 102, 103 may be used in a confined environment because the elastic strain sensors may have a low profile (that is, their dimension measured perpendicularly to the longitudinal axis 28 is relatively small). Fourth, the continuum robots 10, 101, 102, 103 may be used within a machine (such as a gas turbine engine) because the operation of the elastic strain sensors is not affected by interference with metallic parts of the machine. Fifth, the ability to control the movement of the continuum robot 10, 101, 102, 103 using the elastic strain sensors may place a relatively low burden on the processing power of the controller 22. For example, the controller 22 may use relatively little processing power where the data structure 122 is a look-up table.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

In some examples, the continuum robot 10, 101, 102, 103 may be a 'soft' robot with no defined component at the intersection between segments. Where the continuum robot 10, 101, 102, 103 is a 'soft' robot, the continuum robot 10, 101, 102, 103 may not include any disks, and instead comprise soft fluid actuators that include elastomeric matrices with embedded flexible materials. For example, the first actuator 18 may comprise one or more elastic vessels that are configured to change shape in response to a change in internal pressure of the elastic vessels. The one or more elastic vessels may extend between the first end and the second end of the first segment. The one or more elastic vessels may comprise one or more of the elastic strain sensors to measure the change in shape.

Except where mutually exclusive, any of the features may be employed separately or in combination with any other features and the disclosure extends to and includes all combinations and sub-combinations of one or more features described herein.

## Claims

1. A continuum robot comprising:
a first segment defining a first end and a second end, the first segment including a first actuator coupled to the second end and configured to control movement of the second end relative to the first end; and
a first elastic strain sensor coupled to the first segment and positioned between the first end and the second end, the first elastic strain sensor being configured to provide a first output signal associated with the movement of the second end relative to the first end.

2. A continuum robot as claimed in claim 1, wherein the first elastic strain sensor comprises a first conductive elastic member, a second conductive elastic member, and a non-conductive elastic member positioned between the first conductive elastic member and the second conductive elastic member.

3. A continuum robot as claimed in claim 1 or 2, further comprising a flexible backbone extending through the first segment and between a first disk and a second disk of the first segment, a gap being defined between the flexible backbone and the first elastic strain sensor.

4. A continuum robot as claimed in claim 3, wherein the first disk and the second disk define a perimeter of the first segment, the first elastic strain sensor being positioned at the perimeter of the first segment.

5. A continuum robot as claimed in any of the preceding claims, further comprising a second elastic strain sensor coupled to the first segment and positioned between the first disk and the second disk, the second elastic strain sensor being configured to provide a second output signal associated with the movement of the second disk relative to the first disk.

6. A continuum robot as claimed in claim 5, wherein the first segment defines a longitudinal axis, the first elastic strain sensor and the second elastic strain sensor are positioned to at least partially overlap one another along the longitudinal axis.

7. A continuum robot as claimed in claim 6, further comprising a controller configured to receive the first output signal and the second output signal, and to perform a torsion measurement of the first segment using the received first output signal and second output signal.

8. A continuum robot as claimed in claim 5, wherein the first segment defines a longitudinal axis, the first elastic strain sensor and the second elastic strain sensor are positioned to not overlap one another along the longitudinal axis.

9. A continuum robot as claimed in any of the preceding claims, further comprising a controller configured to receive the first output signal from the first elastic strain sensor, and to determine the shape of the first segment using the received first output signal.

10. A continuum robot as claimed in claim 9, wherein the controller is configured to control the first actuator using the determined shape of the first segment to move the second disk relative to the first disk.

11. A continuum robot as claimed in any of the preceding claims, further comprising:
a second segment including a third disk at a first end of the second segment, a fourth disk at a second end of the second segment, a second actuator coupled to the fourth disk and configured to control movement of the fourth disk relative to the third disk; and
a third elastic strain sensor coupled to the second segment and positioned between the third disk and the fourth disk, the third elastic strain sensor being configured to provide a third output signal associated with the movement of the fourth disk relative to the third disk.

12. A continuum robot as claimed in any of the preceding claims, wherein the first actuator comprises one or more elastic vessels that are configured to change shape in response to a change in internal pressure, the one or more elastic vessels extend between the first end and the second end of the first segment.

13. A method of controlling a continuum robot as claimed in any of the preceding claims, the method comprising:
receiving the first output signal from the first elastic strain sensor;
determining the shape of the first segment using the received first output signal; and
controlling the first actuator using the determined shape of the first segment to move the second end relative to the first end.

14. Apparatus for controlling a continuum robot as claimed in any of claims 1 to 12, the apparatus comprising a controller configured to:
receive the first output signal from the first elastic strain sensor;
determine the shape of the first segment using the received first output signal; and
control the first actuator using the determined shape of the first segment to move the second end relative to the first end.

15. A computer program that, when read by a computer, causes performance of the method as claimed in claim 13.
